(19) Europäisches Patentamt
European Patent Office
Office européen des brevets

(11) EP 0 581 795 B1

## (12) EUROPEAN PATENT SPECIFICATION

(45) Date of publication and mention
of the grant of the patent:
**26.08.1998 Bulletin 1998/35**

(21) Application number: **92908263.4**

(22) Date of filing: **24.04.1992**

(51) Int Cl.$^6$: **C06D 5/10**, B01J 7/02,
F16N 11/10

(86) International application number:
**PCT/CA92/00171**

(87) International publication number:
**WO 92/19571 (12.11.1992 Gazette 1992/28)**

(54) **GAS GENERATOR**

GASGENERATOR

GENERATEUR DE GAZ

(84) Designated Contracting States:
**DE FR GB**

(30) Priority: **24.04.1991 US 690527**

(43) Date of publication of application:
**09.02.1994 Bulletin 1994/06**

(73) Proprietor: **ORLITZKY, Anton**
**Delta British Columbia V4M 2K2 (CA)**

(72) Inventors:
• **OLOMAN, Colin**
**Vancouver, British Columbia V6N 2R5 (CA)**
• **OEHR, Klaus H.**
**Surrey, British Columbia V3S 5J9 (CA)**

(74) Representative: **Burrows, Anthony Gregory et al**
**Business Centre West**
**Avenue One, Business Park**
**Letchworth Garden City**
**Hertfordshire SG6 2HB (GB)**

(56) References cited:
WO-A-90/11248          US-A- 3 674 702
US-A- 3 993 577         US-A- 4 640 445
US-A- 4 692 335         US-A- 4 847 093

• **J.R. ROBINSON 'Sustained and Controlled**
**Release Drug Delivery Systems' 1978 , MARCEL**
**DEKKER, INC. , NEW YORK**
• **H.F. RASE 'Chemical Reactor Design for**
**Process Plants. Volume One: Principles and**
**Techniques.' 1977 , JOHN WILEY & SONS , NEW**
**YORK cited in the application**
• **WORLD PATENTS INDEX LATEST Week 8913,**
**Derwent Publications Ltd., London, GB; AN**
**89-098073**
• **JOURNAL OF THE CHEMICAL SOCIETY 1928,**
**pages 1099 - 1105; THOMAS WESTON JOHNS**
**TAYLOR: 'The Action of Nitrous Acid on**
**Amino-compounds. Part I. Methylamine and**
**Ammonia.' cited in the application**
• **Chem. Zentralblatt 1965, Nr.30-0633 F. Mahieux**
**et al. "Stickstoffgenerator" See Abstract**

## Description

Field Of The Invention

This invention relates to gas generators, and further relates to fluid dispensers which dispense fluid by means of internally generated gas pressure acting on the fluid.

Technology Review

Devices for dispensing fluids (used herein to refer to any flowable liquid) by means of gas pressure generated chemically within the device, are well known. One particularly useful type of the foregoing dispensing devices is the automatic lubricator of the type disclosed in U.S. Patent 4,671,386 to Orlitzky and U.S. Patent 4,023,648 to Orlitzky et al. Such devices allow automatic lubrication of equipment over prolonged periods of time without need of operator intervention following installation. Another automatic lubricator using an electrochemical gas generator is disclosed in U.S. Patent 4,023,648 to Orlitzky et al. As shown in U.S. Patent 4,693,283 to Talas, such devices are readily adapted to dispensing other fluids, such as microbicides. In the devices of Orlitzky '386 and '648 gas is generated by means of an electrochemical reaction and the devices require an electrochemical cell and associated circuitry and, in the case of the device of the '386 patent, also requires batteries for power. Other automatic lubricators are described, for example, in U.S. Patents 3,842,939 and 3,430,731 to Satzinger. U.S. Patent 3,983,959 to Satzinger attempts to control varying dispensing rates from the devices of the '939 and '731 patents by providing an appropriately covered bimetallic galvanic couple intended to provide a constant rate of gas generation at least at a constant temperature. All of the devices of the foregoing Satzinger patents produce potentially explosive hydrogen gas.

Other fluid dispensing devices which use internally generated gas pressure include those disclosed in U.S. Patents Re. 32,383 to Banks; 3,718,236 to Reyner et al.; and 4,379,453 to Baron. Both the Banks and Reyner et al. patents describe aerosol type fluid dispensers which use carbon dioxide pressure generated from an acid/bicarbonate reaction to expel fluid. Some measure of control of gas pressure is achieved by use of a plurality of recesses or pockets containing reagent and which are opened sequentially depending upon the amount of fluid which has been dispensed. Such devices require relatively complex mechanical construction to ensure successive exposure of reagent. The Baron patent discloses a pliable infusion bag which also dispenses fluid by means of internally generated gas pressure, the required pressure being generated by reagents contained in frangible elements situated within the bag. However, the frangible elements must be broken by manual manipulation through the pliable bag as required.

A rate release controlling arrangement is also described in U.S. Patent 4,847,093 to Ayer et al. wherein a gas generating reagent is surrounded by an osmotic rate release controlling wall in an attempt to provide relatively constant release of a drug for up to 12 to 14 hours at a relatively constant body temperature. U.S. Patent 4,640,445 discloses a portable injector which reacts two liquid solutions to produce oxygen at a rate which allows relatively constant injection of liquid over a period of days at least at a constant tmperature.

In many fluid dispensing devices, such as the automatic lubricators described, it is best to have a relatively constant rate at which the fluid is expelled over long periods of time (eg. many days, weeks or months), and which rate is not extremely affected by ambient temperature. This in turn requires a relatively constant rate of gas generation under the foregoing conditions. Many potentially useful gas generating reactions are known such as that disclosed in U.S. Patent 4,806,180 to Goetz et al. The Goetz patent reaction generates inert nitrogen gas by reacting an azide with an oxidant, but at an almost explosive rate. As seen from the above, many other useful gas generating reactions have required relatively complex device constructions to attain even limited control of gas generation rate at a constant temperature.

## Summary of the Invention

According to a first aspect of the invention there is provided a gas generator of the type comprising a liquid and a solid composition contactable with each other to produce a gas-generating reaction, the gas generator including a gas-generating reagent combination serving to produce said gas-generating reaction, said gas-generating reagent combination comprising first and second reagents of which the first reagent is a solid reagent in said solid composition characterised in that

the solid reagent is dispersed in an inert solid,

and in that

contact between the liquid and the solid composition generates a gas for at least 20 hours during which, at any elapsed time $t$ of the reaction,

$$V = Y \cdot t^m$$

where:

$V$ = the volume of gas produced as measured at constant temperature and pressure;
$Y$ = a rate constant related to the rate of reaction; and
$m$ = a value of between 0.5 and 1.3 when the temperature is constant.

According to a second aspect of the invention there is provided a fluid dispensing apparatus comprising:

a) a gas generator;
b) a reservoir for containing a fluid to be expelled, the reservoir having an outlet; and
c) a movable member movable by pressure from the gas generated by the gas generator to urge the fluid in the reservoir out thereof through the outlet;

characterised in that the gas generator is a gas generator of the type comprising a liquid and a solid composition contactable with each other to produce a gas-generating reaction, the gas generator including a gas-generating reagent combination serving to produce said gas-generating reaction, said gas-generating reagent combination comprising first and second reagents of which the first reagent is a solid reagent in said solid composition
wherein the solid reagent is dispersed in an inert solid,
and wherein contact between the liquid and the solid composition generates a gas for at least 20 hours during which, at any elapsed time $t$ of the reaction,

$$V = Y \cdot t^{m}$$

where:

$V$ = the volume of gas produced as measured at constant temperature and pressure;
$Y$ = a rate constant related to the rate of reaction; and
$m$ = a value of between 0.5 and 1.3 when the temperature is constant.

The present invention then, provides gas generators as well as fluid dispensing devices using such gas generators. The gas generators have a liquid, and a solid composition comprising a solid reagent which reacts with a second reagent (in the liquid) following contact with it.

Typically, the solid composition would be separated from the liquid but positioned within the gas generator so that it can be brought into contact therewith (by movement of the liquid or solid composition). The use of a solid composition is essential in the present invention in order to maintain the reaction under 'mass transfer control' (as described later) to suppress the effect of varying reagent concentration on reaction rate in an otherwise homogeneous reaction system and/or to suppress the effect of temperature on reaction rate. The solid composition may generate gas upon contact with the liquid as a result of the first reagent reacting with the liquid (i.e. the liquid itself is a second reagent) or a second reagent carried by the liquid. In the latter situation the second reagent may previously be dissolved in the liquid or the solid composition may also contain a second reagent such that liquid contact with the solid composition brings both reagents into contact with one another. The solid composition may either consist essentially of a suitable solid reagent (eg. stearylamine for a reaction of Equation 5 (below) or may additionally comprise an inert solid (eg. a hydrocarbon wax) in which the first reagent is dispersed.

The reagents and solid composition selected are so as to generate a gas for at least 20 hours during which, at any elapsed time of the reaction, m in Equation 4 (see below) has a value between about 0.5 to 1.3, and preferably 0.7 to 1.3. Preferably, the reaction has an m within the foregoing ranges when the reaction is performed at a constant temperature of some value between about -30°C to about 40°C. That is, a reaction meets the foregoing criteria if m falls within the given range at even a single temperature within the temperature range, even if m may be outside the range at some other temperature (whether inside or outside the temperature range). Further, where it is expected that the gas generator will be used in variable ambient temperature conditions and it is desired to decrease the effect of such variable temperature on gas volume generated (such as in automatic lubricators), the reagents are preferably selected such that the reaction has an "apparent activation energy" (represented by 'E' in this application, and essentially the activation energy measured without any compensation for reagent diffusion limitations as measured over a temperature range of at least about 5°C to about 40°C) of no greater than about 40 kJ/mole of gas produced and preferably less than about 30 kJ/mole.

For many practical devices using the gas generators described, it is preferable that the reaction produces a volume of gas between about 0.1 and 100 mL per day at STP (standard temperature and pressure of 0°C and 1 atmosphere).

A fluid dispensing device of the present invention, such as an automatic lubricator, would additionally be provided with a fluid reservoir and a movable member which receives the gas pressure and acts in response thereto to urge fluid through a fluid reservoir outlet.

Drawings

Embodiments of the invention will now be described with reference to the Drawings, in which:

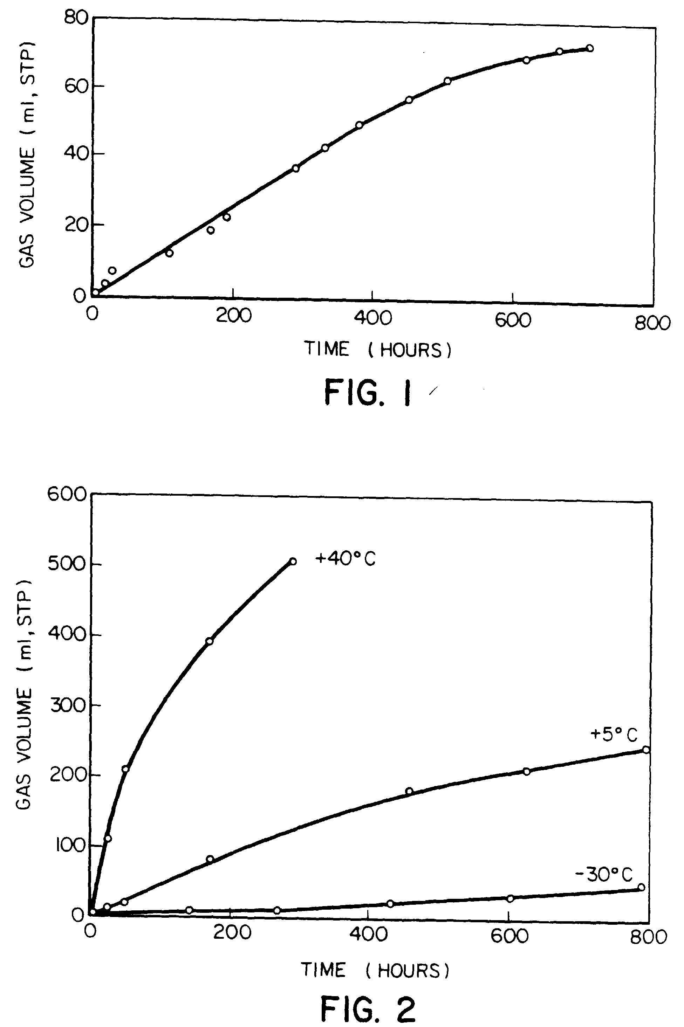

Figures 1 to 9 are plots of gas generated versus elapsed time from gas generators of the present invention as described in Examples 1 to 9 below.

Detailed Description of Embodiments of the Invention

The present invention provides gas generators which are capable of generating gas at a relatively constant rate over long periods of time (eg. several days or weeks, or months), and which rate has a reduced dependence on variations in ambient temperature. This is accomplished through selection of reagents such that the reaction rate order and apparent activation energy meet required constraints, as discussed in more detail below.

With regard to reaction rate order, typically, chemical reactions have a rate which is dependent upon reactant concentration (which typically decreases as the reaction proceeds thereby leading to decreased reaction rate), and ambient temperature. This dependence can typically be expressed as:

$$\text{Reaction Rate} = kC^n \qquad\qquad (\text{Equation 1})$$

where

C = concentration of reagent
n = reaction order
k = reaction rate constant = $Ae^{-E/RT}$
A = constant
E = activation energy of reaction
R = universal gas constant
T = temperature

According to the "law of mass action" the order of typical chemical reactions is 1 or higher i.e. "n" in equation 1 above equals "1." However, gas generation at constant rate requires a reaction order of zero. For n = 0, Equation 1 can be integrated for the case of a gas generating reaction with the substitution of Equation 2 to obtain Equation 3 as follows:

$$C = a(V_t - V) \qquad\qquad (\text{Equation 2})$$

$$V = Yt \qquad\qquad (\text{Equation 3})$$

where

a = constant
$V_t$ = total gas volume available from stoichiometric reaction of the limiting reagent
V = actual gas volume produced in the time 't' (at given, constant, temperature and pressure)
t = time period of the reaction
Y = rate constant

Equation 3 (zero order reaction) shows an ideal relation between gas volume and time (gas volume increases linearly over elapsed time) which is difficult to attain in practical situations. For the purpose of the present invention, it is sufficient if:

$$V = Y \cdot t^m \qquad \text{(Equation 4)}$$

where m is between about 0.5 and 1.3, and is preferably between about 0.7 and 1.3 at a constant temperature of between about -30°C and 40°C. Gas generating apparatus of the present invention should preferably be able to produce gas in accordance with Equation 4 for at least 20 hours, and preferably at least 100 hours, at any constant temperature between about -30°C to about 40°C, with an m between about 0.5 and 1.3. Many gas producing reactions, such as that between an amine and nitrous acid, would be unsuitable if both reactants were in a liquid medium, since they would be too rapid and exhibit too low an m value (i.e. lower than about 0.5). However, both the overall rate of the reaction and the dependence of gas volume on time (i.e. the m value) can be limited by providing one of the reagents in a solid composition (either a reagent is itself a suitable solid or it is mixed with a suitable inert solid to form a solid matrix). It is believed that such limitation occurs since, with suitable solid compositions, such as those comprising waxes (eg. hydrocarbon waxes), the reaction rate is under the control of mass transfer (specifically, the reaction rate is limited by diffusion of reagent molecules in the liquid to the solid surface and/or into the solid composition, and not by the rate of the reaction between homogeneous reagents).

The apparent activation energy of a reaction is related to the degree to which reaction rate will vary with temperature. For example, in the case of a reaction of type:

$$W + Z \longrightarrow \text{Products}$$

the rate in a single homogeneous phase [eg. in a water solution] follows the kinetic law of equation 5 below:

$$\text{Rate} = k[W]^w[Z]^z \qquad \text{equation 5}$$

where

    k = reaction rate constant
    [W]= concentration of W [more accurately=activity of W]
    [Z]= concentration of Z [more accurately=activity of Z]
    w,z= reaction orders with respect to W and Z.

The effect of temperature on the reaction rate is determined by the sensitivity of the reaction rate constant 'k' to temperature through the Arrhenius equation, equation 6 below:

$$k = A\exp[-E/RT] \qquad \text{equation 6}$$

where

    A = a constant called the 'frequency factor'.
    E = activation energy
    R = universal gas constant.
    T = absolute temperature

For most chemical reactions E > about 40 kJ/mole so that an increase of about 10 degrees K in temperature around room temperature will roughly double the value of 'k' and hence double the reaction rate. However, when one of the reactants W or Z is in a separate phase, then the reaction can only occur after the reactants reach each other by diffusion to the phase boundary or 'interface'. For example, if W is in a liquid solution and Z is in a solid immersed in the solution of W then the reaction can only occur after W reaches Z by diffusion through the liquid.

Following the example for w=z=1 the rate of reaction at the surface of the solid is now determined by the concentration of W in the liquid at the interface and the concentration of Z in the solid, as in equation 7:

$$\text{Reaction rate at surface} = k[W]_i[Z] \qquad \text{equation 7}$$

where

k=reaction rate constant
$[W]_i$= concentration of W at interface
$[Z]$ = concentration of Z in solid surface

Also the rate of diffusion of W through the mobile phase is called the rate of mass transfer of W and is given by equation 8 below:

$$\text{Rate of mass transfer of W} = K([W]_b - [W]_i) \qquad \text{equation 8}$$

where

K =mass transfer coefficient
$[W]_b$=concentration of W in bulk of liquid phase
$[W]_i$=concentration of W at the interface

The mass transfer coefficient 'K' is related to the reactant diffusivity approximately through equation 9:

$$K = D/t \qquad \text{equation 9}$$

where

D = diffusion coefficient of W in liquid phase.
t = thickness of the stagnant liquid boundary 'diffusion layer' adjacent the interface.

For a process of mass transfer with chemical reaction occurring at steady state:

$$\text{Rate of mass transfer of W} = \text{rate of chemical reaction of W.} \qquad \text{equation 10}$$

Making the assumption that reaction orders w and z are both 1 (which simplifies the algebra and in any event does not affect the substance of the results below), and also assuming that the activity of solid 'Z' at the solid/liquid interface is constant, then equation 7 and equation 8 can be combined through equation 10 to give equation 11:

$$\text{Rate of mass transfer with chemical reaction} =$$

$$kK[W]_b[Z]/(K + k[Z]) \qquad \text{equation 11}$$

This is equivalent to the process rate per unit interface area.
It will be seen that equation 11 has two limiting cases:

1. If K >> k[Z] then eqn 11 becomes:

$$\text{Process rate} = k[W]_{b[Z]} \qquad \text{equation 12}$$

Equation 12 implies that the process rate is controlled by pure chemical kinetics. In this case the effect of temperature on process rate will be the same as that in a homogeneous reaction (equation 6). That is E> about 40 kJ/mole with a 100% increase in rate due to 10°C increase in temperature (see Rase, H.F., Chemical Reactor Design for Process Plants, John Wiley and Sons, 1977, p.503-504, p.131-132 and Hammett, L.P., Introduction to the Study of Physical Chemistry, McGraw Hill, 1952, p.188).
2. If K << k[Z] then eqn 11 becomes:

$$\text{Process rate} = K[W]_b \qquad\qquad \text{equation 13}$$

Equation 13 implies that the process rate is controlled purely by mass transfer of W to the interface. In this case the effect of temperature on the process rate is determined by the effect of temperature on 'K' the mass transfer coefficient. As is known, the apparent activation energy for pure mass transfer control is $E <$ approx 20 kJ/mole and an increase of 10 degrees raises 'K' by about 10-30% due to the effect of temperature on diffusion coefficient and the density and viscosity of the liquid (see Rase and Hammett references given above). Thus the rate of a process under mass transfer control is much less sensitive to temperature changes than that of a process under kinetic control.

As seen from limiting case 2 above, the effect of temperature on reaction rate can also be controlled for a given reaction by providing conditions which limit the magnitude of K (i.e. by mass transfer control). The present invention accomplishes this by providing a first reagent in the form of a suitable solid composition (eg. such as the first reagent being dispersed in an inert solid), and a second reagent disposed to be brought into contact with the first reagent by a suitable liquid (the second reagent typically being dissolved in the liquid). As a result, diffusion of the second reagent to the first reagent is limited. It will be appreciated that for some reactions the value of k[Z] may be of the same order as that of K and the reaction therefore proceeds under mixed kinetic and mass transfer control. In such cases the apparent activation energy is roughly in the range $20 < E < 40$ kJ/mole, and the reaction rate is constrained, but not controlled by mass transfer. For the purposes of the present invention, an acceptable value of E, the apparent activation energy, is below about 40 kJ/mole which corresponds to less than a 100% increase in rate for a 10 °C increase in temperature, or below about 30 kJ/mole which corresponds to about 50% increase in rate for a 10 °C increase in temperature. Lower values of E are preferred for fluid dispensing devices of the present invention so that the influence of temperature upon reaction rate is further reduced.

Bearing the above considerations in mind, there are basically two situations in which gas generators of the present invention may be used. These are constant or variable ambient temperature. Variables, such as reagent concentration, should be controlled for each of those situations as described below:

Constant Temperature

Referring to equation 11, at a constant temperature, regardless of the controlling mechanism, the rate of gas generation will vary with $[W]_b$, [Z] and K. To obtain a constant rate of gas generation at constant temperature the value of $[W]_b$ can be held nearly constant by providing W through a buffered chemical equilibrium (eg. involving hydrogen ion from a weak acid). Also, if the solid Y dissolves completely on reaction, then [Z] is automatically held constant until all the solid is consumed. The foregoing assumes pure solid Z or uniform distribution of solid Z in the solid matrix. Alternatively, it is possible that the distribution of Z in an inert solid could be varied to control the rate of gas generation - and thus achieve m=1. The value of'K' depends on fluid dynamic conditions which can be held nearly constant and on the thickness of the 'diffusion layer'. For a pure solid reactant the diffusion layer thickness should be nearly independent of the dissolution of reactant and the rate of gas generation at constant temperature will be independent of time (zero order) as desired. This case probably corresponds to Example 1 below in which pure solid stearylamine is used.

For a solid reactant mixed uniformly in an inert solid matrix the thickness of the diffusion layer 't' will increase as the solid reactant is consumed and a porous layer of inert material develops between the solid reactant and the bulk solution. As 't' increases 'K' decreases, so the rate of gas generation at constant temperature falls with time. This case of the shrinking reactant core probably corresponds to each temperature in Examples 2, 3, 4, 5 and 7 below. The magnitude of this diffusion effect will depend on the fraction of reactant in the solid matrix and on the solid surface/ solid volume ratio (i.e. the shape of the solid composition). The value of 'm' measured in those examples probably contains the foregoing 'shrinking core' effect and could be manipulated by changing reactant fraction and surface/ volume ratio. For example, the low 'm' of 0.4 obtained with carbon dioxide in the example 7 below is likely due to the high dilution of calcium carbonate by wax - the volume fraction of calcium carbonate in that example was only 0.13.

It will be appreciated that it is possible to approximate zero order kinetics if the extent to which the reagents are consumed is kept low (eg. less than about 10% of the limiting reagent). However, to accomplish this requires large excesses of reagents which is impractical in many situations, such as in automatic lubricators. Gas generators of the present invention should exhibit low order kinetics for at least about 10% of the limiting reagent, and preferably for at least about 30% of the limiting reagent.

Variable Temperature

It will be seen from Equation 11 that as the temperature changes the rate of gas generation will vary with $[W]_b$, $[Z]$, K and k. By maintaining $[W]_b$ and $[Z]$ nearly constant as described above, the rate will be essentially sensitive only to variation in K and k. Where a reaction is selected which falls under kinetic control within the temperature range, then 'E' will be high (i.e., E > approximately 40 kJ/mole) and hence the reaction rate will be very sensitive to temperature changes. Such a case probably corresponds to Example 1 below since the reaction of stearylamine is relatively slow. A similar situation occurs in Examples 4 and 8 below probably because the rate of reaction of methylamine hydrochloride is relatively low at high pH (i.e., pH>7.5 approx.).

However, if a reaction is selected which remains under pure mass transfer control throughout the temperature range of interest then 'E' will be less than about 20 kJ/mole and the change in rate should be of the order of 1-3% per °C. Such a situation corresponds to Example 3 below, in which the chemical reaction of methylamine hydrochloride is relatively fast at pH = 6.5, and the volume fraction solid reactant in the matrix is about 0.43.

In some situations, the gas generation may go under 'mixed control' where both kinetics and mass transfer are of the same order of magnitude. Such a situation probably corresponds to the reaction of Example 2 below, which is the same as Example 3 except the volume fraction of solid reactant in the matrix is increased to approximately 0.59. The decreased dilution by wax lowers the mass transfer barrier to reaction of methylamine hydrochloride.

In summary from the above:

1. At fixed temperature a constant rate of gas generation can be obtained using a pure solid reactant with a buffered liquid reactant (or possibly excess liquid reactant, although such an approach will lead to increased size of the gas generator).

2. At fixed temperature the rate of gas generation from a solid reactant in an inert matrix will normally decrease with time. If m > 1 then rate increases with time. This effect can be controlled by manipulating variables such as the concentration of the reactant in the solid composition and the surface/volume ratio of the solid to achieve about 0.5 < m < about 1.3.

3. With varying temperature the variation of rate of gas generation with temperature can be controlled to useful limits (i.e. E<40 and preferably <30 kJ/mole of gas produced) if the gas generation occurs under mass transfer constraint. Such constraint can be achieved by choosing a first reagent which, when contacted with the liquid under homogeneous conditions, would produce gas at a rate many times greater than required for a particular purpose (eg. such as in a fluid dispensing device), and providing it in the form of a solid composition (either by dispersing the first reagent in an inert solid or otherwise providing the reagent in solid form, such as a suitable solid derivative) to bring the reaction under mass transfer constraint. That is, a system preferably with $k[Z] >> K$ or at least $k[Z] \approx K$ for all temperatures at which the gas generator is to be used.

Mass transfer control, versus constraint, can be achieved by increased dilution of the reagent in the solid composition with inert solid - but this leads to decreased 'm' due to the shrinking core effect discussed above. It is possible that the distribution of solid reactant in the inert matrix could be varied, as discussed above, to overcome this problem. Furthermore, the extent of reagent dilution is also constrained by the size limitations of practical gas generators. In practice the solid composition chosen will compromise between the sensitivity to temperature and the uniformity of gas generation rate (within the constraints of gas generator dimensions required for any particular purpose, such as that for an automatic lubricator). The criteria of 0.5<m<1.3 and E<40 or preferably <30 kJ/mole define the extent of this compromise. Thus, a combination of solid and liquid reagents is chosen that gives $k[Z]$ approximately equals [K] so that E<40kJ/mole or preferably $k[Z]$>K so that E < 30 kJ/mole.

From the above discussion and the examples below, it will be seen that the extent of dilution of the solid reactant by inert solid [e.g., wax], the solid surface area and solid shape can be varied to affect the absolute rate of gas generation and the values of the parameters 'm' and 'E'. Additional variables that can be adjusted to affect performance of the gas generator:

i. The concentration of the liquid phase source reactant(s), E.g., sodium nitrite in most of our examples or acid in the carbonate/carbon dioxide example.

ii. The pH of the liquid, which determines the concentration of active reaction species in the liquid such as nitrous acid or hydrogen ion in our examples. This occurs through the chemical equilibria in solution. Liquid pH is controlled by addition of acid/base buffers like potassium hydrogen phosphate. It is preferable to have excess buffer present in a separate phase [e.g. as a solid] to maintain the liquid phase pH as buffer is consumed in the reaction.

iii. The nature of the antifreeze added to the liquid (eg. dimethyl sulfoxide ("DMSO") or ethylene glycol). These can be adjusted to vary mass transfer and kinetic parameters as well as the solution freezing point. Also the polarity of the antifreeze may affect the rate at which the liquid penetrates the solid, with lower polarity liquids tending to penetrate non-polar solids (such as waxes) at a greater rate than more polar liquids.

iv. The concentration of water in the liquid phase may also affect the rate of reaction.

v. It is preferred that the products of reaction dissolve in the liquid to leave thc solid reactant accessible to the liquid reactant through the pores of the inert solid matrix.

vi. Size of particles of the first reagent dispersed in the inert solid.

A particular reaction type which would be useful in gas generators for fluid dispensing devices, such as automatic lubricators, is that described by Taylor (Journal of the Chemical Society 1928, pages 1099 to 1105) for the reaction of primary amines with nitrous acid to produce inert nitrogen according to the following reaction:

$$RNH_2 + HNO_2 \rightarrow N_2 + ROH + H_2O \qquad \text{(Equation 14)}$$

where R represents an alkyl group

which reaction was shown to follow the equation:

$$\text{Reaction rate} = kC_1(C_2)^2$$

where:

k = reaction rate constant

$C_1$ = concentration of primary amine reagent

$C_2$ = concentration of nitrous acid reagent

Such a reaction order under homogeneous conditions is clearly unsuitable for generating gas at a constant rate, even at a fixed temperature, because the reaction order 'n' is too high. However, where one of the reagents, such as the amine, is in the form of a solid or is dispersed in an inert solid (i.e. one that is not substantially altered during the gas generating reaction), such as a hydrocarbon wax, the reaction can be brought under mass transfer control with m between about 0.5 and 1.3 as previously described, and in properly constructed cases with E < about 40 kJ/mole and preferably <about 30 kJ/mole of gas generated.

Gas generating formulations of the present invention are described in the Examples. The m and E values are calculated from the experimental results obtained from the following gas generating systems. Where E is not given, it has not been determined. In Examples 1-5 the first reagent is contained in solid cylindrical plugs 1 cm diameter by 5 cm long, although other shapes and sizes are possible. In some cases the solid composition consists of the pure reagent (e.g. stearylamine) and in other cases the reagent is mixed into an inert (i.e. nonreagent) solid such as paraffin wax. The inert solid serves to dilute the reagent and control the reaction rate by limiting access of a second reagent in the solution. Examples 1 to 4 demonstrate the generation of nitrogen by the reaction of Equation 14 above. It will be appreciated that gas generators of the present invention could produce nitrogen by means of reactions other than that of Equation 14, using similar principles in selecting a solid composition and liquid. For example, nitrogen is generated by the gas generator of Example 5 using the reaction of an azide with an oxidant. Further, gas generators of the present invention could also generate other gases, such as carbon dioxide, using similar principles of selecting suitable solid compositions and liquids.

Example 1

Solid Composition - Two 5 cm long by 1 cm diameter stearylamine cylinders.

Liquid Reagent - a solution prepared by mixing 12 mL dimethyl sulphoxide (present as an antifreeze), 8 mL water, 5.3 gram potassium hydrogen phthalate (a pH buffer) and 2.0 gram sodium nitritc.

The solid and liquid reagents were placed in a 50 mL Erlenmeyer flask connected to a gas burette. The flask and burette were kept in an oven at 42°C for one month and the volume of gas generated was recorded at intervals during this period. Figure 1 is a plot of gas volume (corrected to standard conditions of 0°C and 1 atm absolute pressure) observed versus time. Initial and final solution pH's were 6.3 and 6.2 respectively. The 'm' figure of merit value for this composition was 0.83.

A further trial was performed using the same composition except that dimethyl sulfoxide was replaced with ethylene glycol (12 mL) and gas generation measured at room temperature. 100 mL of gas were produced in 300 hours with 'm'= about 0.7.

Thus, changing the antifreeze component increased the reaction rate. This may bc be due to the difference in polarity between the two antifreeze components.

Example 2

| Solid composition - | One 5 cm long by 1 cm diameter cylinder prepared by freezing 1.4 grams of molten paraffin wax (melting point 65 °C) mixed with 2.8 grams of powdered methylamine hydrochloride. |
|---|---|
| Liquid Reagent - | A solution of 12 mL ethylene glycol (added as an antifreeze), 8 mL water, 2 grams sodium nitrite, 5 grams potassium hydrogen phosphate and 5 M potassium hydroxide added dropwise to pH 6.5. Note that the potassium hydrogen phosphate does not dissolve completely in this mixture (this helps maintain a constant pH buffer activity as the reaction proceeds). |

Three experiments were run in parallel at temperatures of -30, +5 and +40°C respectively. As in Example 1, the volume of gas generated was measured for each run over a period of 800 hours. The results are shown in Figure 2. The 'm' figure of merit value from the -30, +5 and +40°C experiments respectively was found to be 1.23, 0.79 and 0.55 respectively. Figure of merit value E was found to be 27 kJ/mole of gas produced.

In the calculation of E in the Examples of this application, the lowest value of m is used in each case since better statistical fits are obtained from the data. To illustratc illustrate the calculation of E, the following data are generated:

| Temperature (°C) | | | -30 | +5 | +42 |
|---|---|---|---|---|---|
| Reaction order parameter | m | | 1.23 | 0.79 | 0.55 |
| Rate constant | Y | | 0.012 | 1.43 | 23 |
| Pseudo-rate constant obtained for m=1.23 | X | | 0.012 | 0.90 | 0.55 |
| Correlation coefficient | | | 0.99 | 0.92 | 0.76 |
| Activation energy from X and T | E=7.4 kJ/mole | | | | |
| Pseudo-rate constant obtained for m=0.55 | X | | 0.91 | 5.3 | 23 |
| Correlation coefficient | | | 0.93 | 0.98 | 0.99 |
| Activation energy from X and T | E=27 kJ/mole | | | | |
| Note: X is a pseudo-rate constant equivalent to 'Y' in equation 4 above but based on 'm' assumed constant for all temperatures. Y is the constant of equation 4 above based on the listed value of 'm' for each temperature. | | | | | |

The lower correlation coefficients obtained with m=1.23 indicate this gives a poorer fit to the data. Also, a plot of log(X) versus 1/T for m=1.23 shows a poor fit to the Arrhenius equation (see equation 6 above). The value of E=7.4 kJ/mole was found by statistically fitting the values of X to the Arrhenius equation. This value of E is unreliable since the correlation coefficient in this fit was only 0.29. Thus E is taken to be about 27 kJ/mole.

Example 3

| Solid composition - | One 5 cm long by 1 cm diameter cylinder prepared by freezing 1.9 grams of molten paraffin wax (melting point 65 °C) mixed with 2.1 grams of powdered methylamine hydrochloride. |
|---|---|
| Liquid Reagent - | A solution of 12 mL ethylene glycol, 8 mL water, 2 grams sodium nitrite, 5 grams potassium dihydrogen phosphate and 5 M potassium hydroxide to pH 65. |

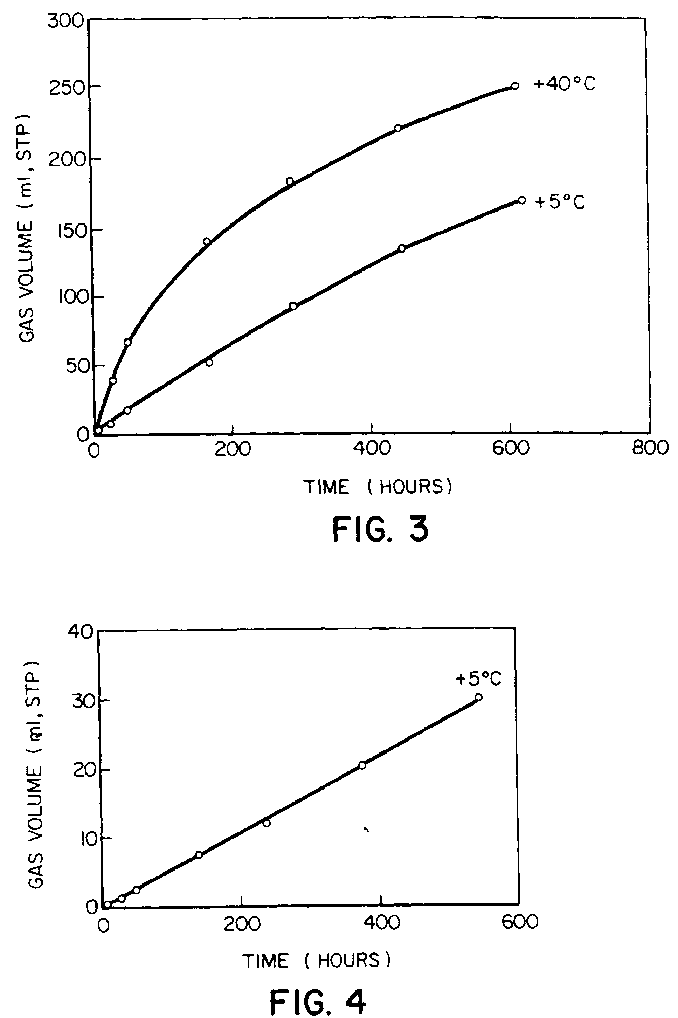

As in Example 1, the volume of gas generated was measured at 5°C and 40°C for a 1 month run. Figure of merits "m" were found to be 0.83 at 5°C and 0.51 at 40°C. Figure of merit "E" was found to be 9.7 kJ/mole of gas produced. Figure 3 is a plot of gas volume versus time for Example 3.

Example 4

| Solid composition - | One 5 cm long by 1 cm diameter cylinder prepared by freezing 1.4 grams of molten paraffin wax (melting point 65 °C) mixed with 2.8 grams of powdered methylamine hydrochloride. |
|---|---|
| Liquid Reagent - | A solution of 12 mL ethylene glycol, 8 mL water, 2 grams sodium nitrite, 5 grams potassium |

dihydrogen phosphate and 5 M potassium hydroxide added dropwise to pH 8.0.

As in Example 1, the volume of gas generated at 5°C was measured over a period of 600 hours. The results are shown in Figure 4 and the figure of merit "m" was found to be 1.0.

Example 5

| Solid composition - | One 5 cm long by 1 cm diameter cylinder prepared by freezing 2.3 grams of molten paraffin wax (melting point 65 °C) mixed with 2.8 grams of powdered sodium perborate (which acts as an oxidant). |
| Liquid Reagent - | A solution of 12 mL ethylene glycol, 8 mL water, 1.1 grams sodium azide, 0.1 grams potassium thiocyanate, 0.3 grams potassium iodide (potassium thiocyanate and potassium iodide are catalysts for the reaction of the azide) and 1.0 grams potassium bicarbonate (as pH buffer). |

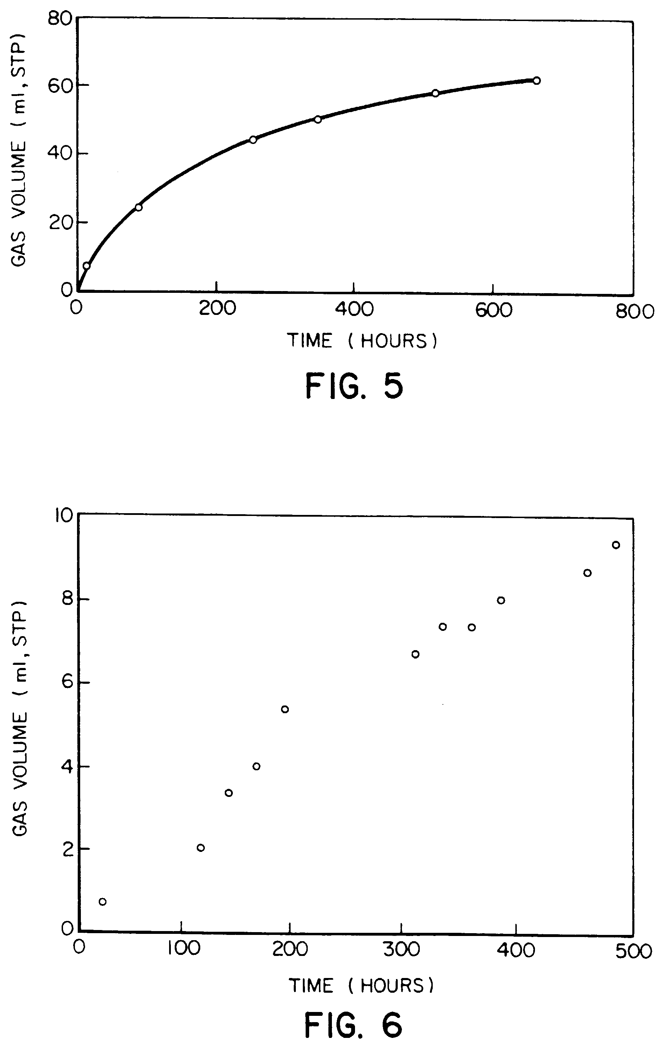

As in Example 1, the volume of gas generated at 5°C was measured over a period of 700 hours. The results are shown in Figure 5 and the figure of merit "m" was found to be 0.5.

Example 6

| First reagent composition | Calcium citrate | 21.2 gram |
| Second reagent composition | Manganese dioxide boric acid | 0.65 gram 6.9 gram |

Both reagents in this Example are sparingly soluble solid powders which are mixed in a paste with a liquid consisting of:

| DMSO | 18 mL |
| Water | 12 mL |

As in Example 1, the gas generation is measured for 500 hours with results as in Figure 6.
The gas generated by this reaction is carbon dioxide:

$$MnO_2 + 10\ H_8C_6O_7 \dashrightarrow 9\ MnH_6C_6O_7 + 13\ H_2O + 6CO_2$$

Reaction rate parameter from Fig. 6 m = 0.91

While the gas generator of Example 6 gave a constant rate of gas generation, thc reagents were bulky and produced only about 10 mL of gas in 500 hours. Thus, a gas generator constructed according to the above is considered impractical for devices such as automatic lubricators. However the principles of the current invention could be applied by those skilled in the art to provide superior carbon dioxide generating devices.

Example 7

| First reagent composition | Calcium carbonate Paraffin wax | 4.5 gram 13.4 gram |

The wax is melted, mixed with powdered calcium carbonate then frozen to a solid plaque of about 6 cm diameter and 0.5 cm thick.

| Second reagent | | |

(continued)

| composition | | |
|---|---|---|
| | Acetic acid | 5.4 gram |
| | DMSO | 11 mL |
| | Water | 6 mL |

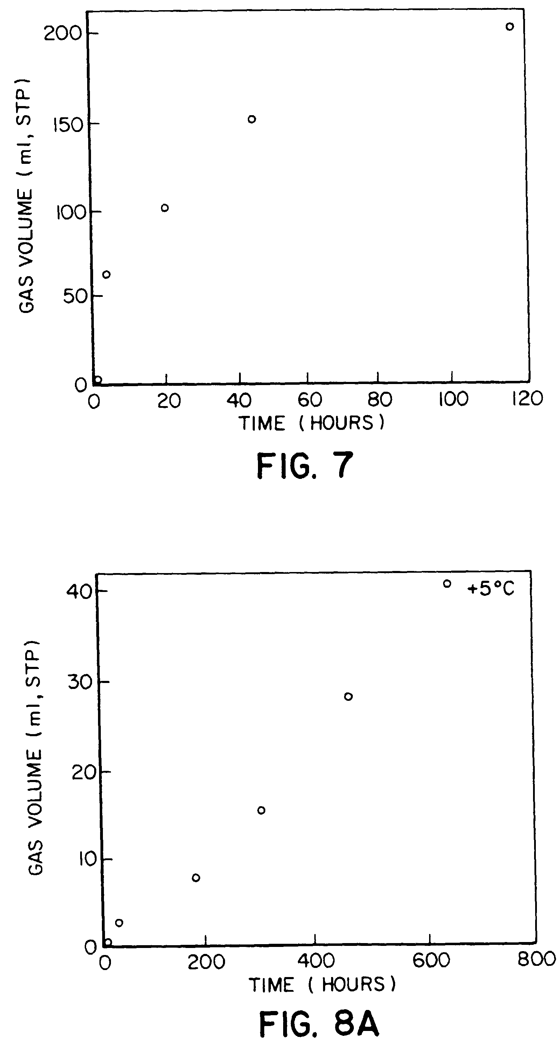

As in Example 1, the gas volume generated at room temperature (15 to 21 °C) was measured for 100 hours with results in Figure 7. This reaction produced carbon dioxide:

$$CaCO_3 + 2CH_3COOH \longrightarrow Ca(CH_3COO)_2 + CO_2 + H_2O$$

Reaction rate parameter from Fig. 7 m = 0.4

The low value of m makes the Example 7 reaction and conditions unsuitable in gas generators of the present invention. However, the initial reaction was fast so that thc low 'm' may be attributable to the high dilution of calcium carbonate by wax (i.e. the shrinking core effect discussed above), and increasing the calcium carbonate concentration may increase 'm' to an acceptable value.

Example 8

| Reactant | Methylamine hydrochloride | 2.1 gram |
|---|---|---|
| | Paraffin wax (MP 65°C) | 1.9 gram |

The wax is melted, mixed with powdered methylamine hydrochloride then frozen to a solid plug 5 cm long by 1 cm diameter.

| Co-reactant | A solution of: | |
|---|---|---|
| | Ethylene glycol | 12 mL |
| | water | 8 mL |
| | sodium nitrite | 2 grams |
| | potassium dihydrogen phosphate | 5 grams |
| | 5 M potassium hydroxide to pH = 7.5 | |

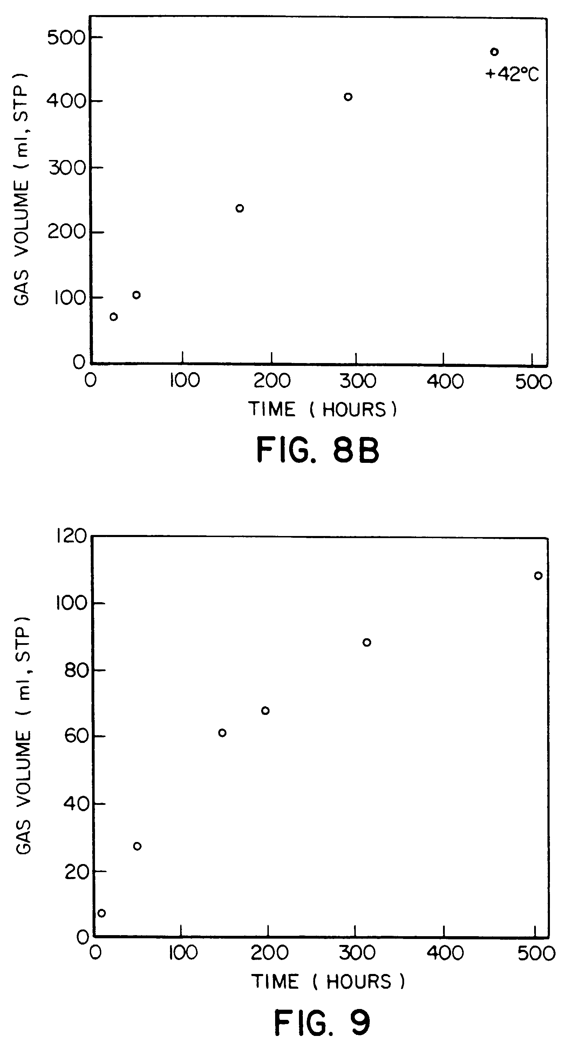

As in Example 3, two experiments were run in parallel at temperatures respectively +5 and +42 °C. The gas generation data are in Figure 8 and the reaction parameters were:

| Temperature (°C) | +5 | +42 |
|---|---|---|
| pH initial | 7.5 | 7.5 |
| final | 7.0 | 7.1 |
| Reaction rate parameter "m" | 1.3 | 0.73 |
| Reaction rate constant | 0.31 | 5.4 |
| Calculated E with m = 0.73 for both temperatures. | E = 59 kJ/mole | |

The gas generator of Example 8 provided good values of m, and is useful as a gas generator of the present invention. However, it should preferably be used only in situations where a fairly constant temperature is expected, since the value of E obtained indicates the reaction to be under kinetic control. Such a high E value may be due to the high pH. A similar trial with pH=8 also gave E>40 kJ/mole.

Example 9

| Reactant | Methylamine hydrochloride | 2.1 grams |
|---|---|---|
| | Paraffin wax | 1.9 grams |

The wax is melted, mixed with powdered methylamine hydrochloride then frozen to a solid plug 5 cm long by 1 cm diameter.

| Co-reactant | A solution of: | |
|---|---|---|
| | propylene glycol | 12 mL |
| | water | 8 mL |
| | sodium nitrite | 2 grams |
| | potassium dihydrogen phosphate | 5 grams |
| | 5 M potassium hydroxide to pH= 7.5 | |

As in Example 1, the volume of gas generated at +5 °C was measured over a period of 500 hours with results in Figure 9.

Reaction rate parameter "m" = 0.53

This Example uses essentially the same parameters as in Example 8, except that changing the antifreeze from ethylene to propylene glycol resulted in the reaction rate being increased by about a factor of 4.

Example 1 then, shows gas production at a relatively constant rate from a solid composition consisting essentially of the pure first reagent, stearylamine. Examples 2, 3 and 4 show gas production at controlled rate from methylamine hydrochloridc dispersed in an inert solid, paraffin wax. Example 5 shows the use of different reagents. Examples 2 and 3 show how dispersing highly reactive methylamine hydrochloride in the inert paraffin wax, can control the rate of gas generation and reduce the effect of temperature on the rate of gas generation. Examples 2,4,8 and 9 show how the rate of gas generation can be controlled by manipulating the liquid composition. It is expected that the rate of gas generation can be controlled by other variations in liquid composition such as the type and amount of organic component and the amount of water.

It is also expected that the gas generating reactions of the above Examples can also be used in a gas generator for a fluid dispensing apparatus, such as an automatic lubricator. In such an apparatus, provision would be made to bring the liquid into contact with the solid composition when it is desired to start gas generation to result in fluid being urged from a fluid reservoir. Similarly, the gas generating reactions described could be used in other fluid dispensers.

Modifications to the specific embodiments of the invention described above are possible. For example, it may, in many cases be possible to interchange the location of the first and second reagents. That is either one could be in the solid composition and the other one in the liquid. This would, of course, be subject to possiblc problems such as decomposition of a reagent over time. For example, in the case of perborate salts, it is expected that in solution they would likely decompose over time and accordingly, for many devices such as fluid dispensers which would normally be stored for a period of time, the perborate salt should preferably be in the solid composition. It is also conceived to disperse both the first and second reactant, in solid form, in an inert solid matrix so that gas generation occurs when the solid matrix contacts a suitable liquid. Further modifications to the present invention arc, of course, possible. Accordingly, the present invention is not limited to the above described embodiments.

## Claims

1. A gas generator of the type comprising a liquid and a solid composition contactable with each other to produce a gas-generating reaction, the gas generator including a gas-generating reagent combination serving to produce said gas-generating reaction, said gas-generating reagent combination comprising first and second reagents of which the first reagent is a solid reagent in said solid composition
characterised in that
   the solid reagent is dispersed in an inert solid, and in that
   contact between the liquid and the solid composition generates a gas for at least 20 hours during which, at any elapsed time $\underline{t}$ of the reaction,

$$V = Y \cdot t^m$$

where:

EP 0 581 795 B1

$\underline{V}$ = the volume of gas produced as measured at constant temperature and pressure;
$\underline{Y}$ = a rate constant related to the rate of reaction; and
$\underline{m}$ = a value of between 0.5 and 1.3 when the temperature is constant.

2. A gas generator as claimed in Claim 1, wherein the inert solid is a wax.

3. A gas generator as claimed in Claim 1 or 2, wherein the apparent activation energy of the gas-generating reaction is no greater than 40 kJ/mole.

4. A gas generator as claimed in Claim 3, wherein said activation energy is no greater than 30kJ/mole.

5. A gas generator as claimed in any preceding Claim, wherein $\underline{m}$ is between 0.5 and 1.3 when the temperature is constant at a value between -30° to 40°C.

6. A gas generator as claimed in any preceding Claim, wherein the volume of gas generated is between 0.lml and 100ml at STP per day at the defined rate for at least 100 hours.

7. A gas generator as claimed in any preceding Claim, wherein the liquid composition includes an antifreeze.

8. A gas generator as claimed in Claim 7, wherein the antifreeze is ethylene or propylene glycol, or dimethyl sulphoxide.

9. A gas generator as claimed in any preceding Claim, wherein the liquid composition includes a pH buffer.

10. A gas generator as claimed in Claim 9, wherein the pH buffer is potassium hydrogen phosphate or potassium bicarbonate.

11. A gas generator as claimed in any preceding Claim, wherein the liquid includes a catalyst.

12. A gas generator as claimed in any preceding Claim wherein said liquid comprises said second reagent.

13. A gas generator as claimed in any preceding Claim, wherein

a) said second reagent comprises one reagent of an azide salt/oxidant reagent pair, or a methylamine chloride/nitrite salt reagent precursor, or primary amine/nitrous acid, reagent pair, and
b) said solid reagent is the other reagent of the chosen reagent pair.

14. A gas generator as claimed in any one of Claims 1 to 12, wherein said second reagent comprises nitrous acid or a nitrite precursor thereof, and said solid reagent is a primary amine or methylamine hydrochloride.

15. A gas generator as claimed in Claim 14, wherein the primary amine is stearylamine.

16. A gas generator as claimed in any one of Claims 1 to 12, wherein said second reagent is an azide salt, and said solid reagent is sodium perborate.

17. A gas generator as claimed in any one of Claims 1 to 10, wherein said first and second reagents are both contained in said solid composition.

18. A gas generator as claimed in Claim 17, wherein, said first reagent is an azide salt.

19. A gas generator as claimed in claim 17, wherein said first reagent is a nitrite salt reagent precursor.

20. A gas generator as claimed in Claim 13 or 16, as appended to Claim 11, wherein the gas-generating reagent combination comprises sodium azide and sodium perborate, and the catalyst is potassium thiocyanate and potassium iodide.

21. A fluid dispensing apparatus comprising:

a) a gas generator;

b) a reservoir for containing a fluid to be expelled, the reservoir having an outlet; and

c) a movable member movable by pressure from the gas generated by the gas generator to urge the fluid in the reservoir out thereof through the outlet;

characterised in that the gas generator is according to any preceding claim.

**22.** An apparatus as claimed in Claim 21, wherein said fluid is a grease.

**Patentansprüche**

**1.** Gasgenerator des Typs mit einer Flüssigkeit und einer festen Zusammensetzung, die zur Herbeiführung einer Gaserzeugungsreaktion miteinander kontaktierbar sind, wobei der Gasgenerator eine Gaserzeugungsreagens-Kombination aufweist, die zum Herbeiführen der Gaserzeugungsreaktion dient, und die Gaserzeugungsreagens-Kombination erste und zweite Reagenzien aufweist, von denen das erste Reagens ein festes Reagens in der festen Zusammensetzung ist,
dadurch gekennzeichnet, daß
das feste Reagens in einem inerten Feststoff dispergiert ist,
und daß
der Kontakt zwischen der Flüssigkeit und der festen Zusammensetzung ein Gas für mindestens 20 Stunden erzeugt, innerhalb derer zu jeder verstrichenen Reaktionszeit t gilt:

$$V = Y \cdot t^{m}$$

wobei

$\underline{V}$   ein bei konstantem Temperaturwert und Druck gemessenes Volumen des erzeugten Gases ist,

$\underline{Y}$   eine auf die Reaktionsrate bezogene Raten-Konstante ist, und

$\underline{m}$   ein Wert zwischen 0,5 und 1,3 ist, wenn die Temperatur konstant ist.

**2.** Gasgenerator nach Anspruch 1, bei dem der inerte Feststoff ein Wachs ist.

**3.** Gasgenerator nach Anspruch 1 oder 2, bei dem die wirksame Aktivierungsenergie der Gaserzeugungsreaktion nicht größer als 40 kJ/Mol ist.

**4.** Gasgenerator nach Anspruch 3, bei dem die Aktivierungsenergie nicht größer als 30 kJ/Mol ist.

**5.** Gasgenerator nach einem der vorhergehenden Ansprüche, bei dem m zwischen 0,5 und 1,3 beträgt, wenn die Temperatur konstant auf einem Wert zwischen -30°C und 40°C liegt.

**6.** Gasgenerator nach einem der vorhergehenden Ansprüche, bei dem das Volumen des erzeugten Gases bei der definierten Rate für mindestens 100 Stunden zwischen 0,1 ml und 100 ml pro Tag bei STP (Normaltemperatur und -druck) liegt.

**7.** Gasgenerator nach einem der vorhergehenden Ansprüche, bei dem die flüssige Zusammensetzung ein Antigefriermittel enthält.

**8.** Gasgenerator nach Anspruch 7, bei dem das Antigefriermittel Ethylen oder Propylenglycol, oder Dimethylsulfoxid ist.

**9.** Gasgenerator nach einem der vorhergehenden Ansprüche, bei dem die flüssige Zusammensetzung einen pH-Puffer enthält.

**10.** Gasgenerator nach Anspruch 9, bei dem der pH-Puffer Kaliumhydrogenphosphat oder Kaliumbicarbonat ist.

**11.** Gasgenerator nach einem der vorhergehenden Ansprüche, bei dem die Flüssigkeit einen Katalysator enthält.

**12.** Gasgenerator nach einem der vorhergehenden Ansprüche, bei dem die Flüssigkeit das zweite Reagens enthält.

**13.** Gasgenerator nach einem der vorhergehenden Ansprüche, bei dem

a) das zweite Reagens ein Reagens eines Reagens-Paares aus Azidsalz/Oxidans, oder eines Reagens-Paares aus einem Methylaminchlorid/einer Nitritsalz-Reagens-Vorstufe, oder eines Reagens-Paares aus primärem Amin/ salpetriger Säure aufweist, und

(b) das feste Reagens das andere Reagens des gewählten Reagens-Paares ist.

**14.** Gasgenerator nach einem der Ansprüche 1 bis 12, bei dem das zweite Reagens eine salpetrige Säure oder eine Nitrid-Vorstufe davon aufweist und das feste Reagens ein primäres Amin oder ein Methylaminhydrochlorid ist.

**15.** Gasgenerator nach Anspruch 14, bei dem das primäre Amin Stearylamin ist.

**16.** Gasgenerator nach einem der Ansprüche 1 bis 12, bei dem das zweite Reagens ein Azidsalz ist und das feste Reagens Natriumperoxoborat ist.

**17.** Gasgenerator nach einem der Ansprüche 1 bis 10, bei dem die ersten und zweiten Reagenzien beide in der festen Zusammensetzung enthalten sind.

**18.** Gasgenerator nach Anspruch 17, bei dem das erste Reagens ein Azidsalz ist.

**19.** Gasgenerator nach Anspruch 17, bei dem das erste Reagens eine Nitritsalz-Reagens-Vorstufe ist.

**20.** Gasgenerator nach einem der Ansprüche 13 oder 16 in Verbindung mit Anspruch 11, bei dem das Gaserzeugungsreagens Natriumazid und Natriumperoxoborat aufweist und der Katalysator Kaliumthiocyanat und Kaliumjodid ist.

**21.** Fluidausgabevorrichtung mit:

a) einem Gasgenerator;

b) einem Reservoir zur Aufnahme eines auszugebenden Fluids, wobei das Reservoir einen Auslaß aufweist; und

c) einem bewegbaren Teil, das durch den Druck des mittels des Gasgenerators erzeugten Gases derart bewegbar ist, daß es das in dem Reservoir enthaltene Fluid durch den Auslaß aus dem Reservoir ausläßt;

dadurch gekennzeichnet, daß der Gasgenerator gemäß einem der vorhergehenden Ansprüche ausgebildet ist.

**22.** Vorrichtung nach Anspruch 21, bei der das Fluid ein Fett ist.

**Revendications**

**1.** Un générateur de gaz du type comprenant une composition liquide et une composition solide pouvant être amenées en contact l'une avec l'autre pour produire une réaction de formation de gaz, le générateur de gaz comprenant une combinaison d'agents réactifs de formation de gaz servant à produire ladite réaction de formation de gaz, ladite combinaison d'agents réactifs de formation de gaz comprenant de premier et second agents réactifs dont le premier agent réactif est un agent réactif solide se trouvant dans ladite composition solide
caractérisé en ce que
l'agent réactif solide est dispersé dans un solide inerte,
et en ce que
un contact entre la composition liquide et la composition solide forme un gaz pendant au moins 20 heures au cours desquelles, à tout temps écoulé $t$ de la réaction,

$$V = Y.t^m$$

où :

$\underline{V}$ = le volume de gaz produit tel que mesuré à température et pression constante ;
$\underline{Y}$ = une constante de vitesse reliée à la vitesse de réaction ; et
$\underline{m}$ = une valeur comprise entre 0,5 et 1,3 lorsque la température est constante.

2. Un générateur de gaz tel que revendiqué à la revendication 1, dans lequel le solide inerte est une cire.

3. Un générateur de gaz tel que revendiqué à la revendication 1 ou 2, dans lequel l'énergie d'activation apparente de la réaction de formation de gaz n'est pas supérieure à 40 kJ/mole.

4. Un générateur de gaz tel que revendiqué à la revendication 3, dans lequel ladite énergie d'activation n'est pas supérieure à 30 kJ/mole.

5. Un générateur de gaz tel que revendiqué dans une revendication précédente quelconque, dans lequel $\underline{m}$ est compris entre 0,5 et 1,3 lorsque la température est constante à une valeur entre -30° à 40°C.

6. Un générateur de gaz tel que revendiqué dans une revendication précédente quelconque, dans lequel le volume de gaz formé est compris entre 0,1 ml et 100 ml à la température et à la pression standard par jour à la vitesse définie pendant au moins 100 heures.

7. Un générateur de gaz tel que revendiqué dans une revendication précédente quelconque, dans lequel la composition liquide comprend un antigel.

8. Un générateur de gaz tel que revendiqué à la revendication 7, dans lequel l'antigel est l'éthylène ou le propylène glycol, ou le sulfoxyde de diméthyle.

9. Un générateur de gaz tel que revendiqué dans une revendication précédente quelconque, dans lequel la composition liquide comprend un tampon de pH.

10. Un générateur de gaz tel que revendiqué à la revendication 9, dans lequel le tampon de pH est du phosphate hydrogéné de potassium ou du bicarbonate de potassium.

11. Un générateur de gaz tel que revendiqué dans une revendication précédente quelconque, dans lequel le liquide comprend un catalyseur.

12. Un générateur de gaz tel que revendiqué dans une revendication précédente quelconque, dans lequel ledit liquide comprend ledit second agent réactif.

13. Un générateur de gaz tel que revendiqué dans une revendication précédente quelconque, dans lequel

   a) ledit second agent réactif comprend un agent réactif d'une paire d'agents réactifs de sel de l'acide hydroazoïque/oxydant, ou un précurseur d'agent réactif de chlorure de méthylamine/sel nitrite, ou une paire d'agents réactifs d'amine primaire/acide nitreux, et
   b) ledit agent réactif solide est l'autre agent réactif de la paire d'agents réactifs choisie.

14. Un générateur de gaz tel que revendiqué dans une quelconque des revendications 1 à 12, dans lequel ledit second agent réactif comprend l'acide nitreux ou un précurseur nitrite de celui-ci, et ledit agent réactif solide est une amine primaire ou un hydrochlorure de méthylamine.

15. Un générateur de gaz tel que revendiqué à la revendication 14, dans lequel l'amine primaire est la stéarylamine.

16. Un générateur de gaz tel revendiqué dans une quelconque des revendications 1 à 12, dans lequel ledit second agent réactif est un sel de l'acide hydroazoïque, et ledit agent réactif solide est du perborate de sodium.

17. Un générateur de gaz tel que revendiqué dans une quelconque des revendications 1 à 10, dans lequel lesdits premier et second agents réactifs sont tous deux contenus dans ladite composition solide.

**18.** Un générateur de gaz tel que revendiqué à la revendication 17, dans lequel ledit premier agent réactif est un sel de l'acide hydroazoïque.

**19.** Un générateur de gaz tel que revendiqué à la revendication 17, dans lequel ledit premier agent réactif est un précurseur d'agent réactif de sel nitrite.

**20.** Un générateur de gaz tel que revendiqué à la revendication 13 ou à la revendication 16, dans sa dépendance de la revendication 11, dans lequel la combinaison d'agents réactifs de formation de gaz comprend du sel de sodium de l'acide hydroazoïque et du perborate de sodium, et le catalyseur est du thiocyanate de potassium et de l'iodure de potassium.

**21.** Un appareil de distribution de fluide comprenant :

a) un générateur de gaz ;
b) un réservoir pour contenir un fluide à expulser, le réservoir présentant une sortie ; et
c) un élément mobile pouvant être déplacé par la pression du gaz formé par le générateur de gaz afin de pousser le fluide dans le réservoir et le faire sortir de celui-ci par la sortie ;

caractérisé en ce que le générateur de gaz est conforme à une revendication précédente quelconque.

**22.** Un appareil tel que revendiqué à la revendication 21, dans lequel ledit fluide est une graisse.

FIG. 1

FIG. 2

FIG. 3

FIG. 4

FIG. 5

FIG. 6

FIG. 7

FIG. 8A

FIG. 8B

FIG. 9